# EUROPÄISCHE PATENTANMELDUNG

(11) **EP 2 073 058 A1**
(43) Veröffentlichungstag der Anmeldung: **24.06.2009**
(21) Anmeldenummer: 08018108.4
(22) Anmeldetag: 16.10.2008
(51) Int. Cl.: G03B 37/00

(54) **Inspektionskamera**

(30) Priorität: 18.12.2007 DE 202007017822 U
(71) Anmelder: Kummert, Bernhard, 97447 Gerolzhofen (DE)
(72) Erfinder: Kummert, Bernhard, 97447 Gerolzhofen (DE)
(74) Vertreter: von den Steinen, Axel

(57) **Zusammenfassung**

Die Erfindung betrifft eine Inspektionskamera (01) zur Inspektion insbesondere von Rohren oder Kanälen, wobei die Inspektionskamera (01) am vorderen Ende (04) eines Vorschubstrangs (05) befestigbar ist, und wobei die Inspektionskamera (01) ein Kameraobjektiv (02) umfasst, mit dem Bildaufnahmen insbesondere im Inneren von Rohren oder Kanälen gemacht werden können, und wobei die Inspektionskamera (01) eine Verstelleinrichtung (03) umfasst, mit der das Kameraobjektiv (02) relativ zum vorderen Ende (04) des Vorschubstranges (05) ferngesteuert positioniert werden kann, wobei die Verstelleinrichtung (03) zumindest zwei motorisch antreibbare Gelenkelemente (07, 08) umfasst, die in Richtung der Längsachse (09) der Verstelleinrichtung (03) hintereinander zwischen dem Kameraobjektiv (02) und dem vorderen Ende (04) des Vorschubstranges (05) angeordnet sind, wobei jedes der Gelenkelemente (07, 08) um zumindest eine Schwenkachse (10, 11, 12, 13) verschwenkbar ist.

## Beschreibung

Die Erfindung betrifft eine Inspektionskamera zur Inspektion insbesondere von Rohren oder Kanälen nach dem Oberbegriff des Anspruchs 1.

Derartige Inspektionskameras werden beispielsweise, keineswegs jedoch ausschließlich, eingesetzt, um Inspektionen in unzugänglichen Bereichen, beispielsweise in Rohren, Kanälen oder Kaminen oder Ähnlichem, ferngesteuert durchführen zu können. Durch die Bildaufnahmen mittels des Kameraobjektivs kann ein visueller Überblick über den Zustand im Inneren des Rohrs oder Kanals ermöglicht werden. Durch die mit der Verstelleinrichtung möglichen Verstellungen des Kameraobjektivs relativ zu dem vorderen Ende des für den Vorschub der Inspektionskamera benutzten Vorschubstrangs kann das Kameraauge in der gewünschten Blickrichtung positioniert werden.

Aus dem Stand der Technik sind verschiedene Verstelleinrichtungen zur verstellbaren Positionierung des Kameraobjektivs von Inspektionskameras bekannt. Die DE 42 31 251 C2 beschreibt eine Vorrichtung, bei der ein halbkugelförmiger Objektivträger auf einer um eine erste senkrecht zur optischen Achse schwenkbaren Lafette gelagert ist. Mittels einer weiteren Lagerung kann der Objektivträger um eine senkrecht zur optischen Achse des Objektivs und zur ersten Achse angeordneten zweiten Achse schwenkend bewegt werden.

Aus der WO 98/47034 A1 ist eine Vorrichtung bekannt, bei der in einem kugelförmigen Objektivhalter zwei einander gegenüberliegende Kalottenplatten mit meridianen Zahnsegmenten sowie einander gegenüberliegende Kalottenplatten mit äquatorialen Zahnsegmenten schwenkbar gelagert sind. Die Antriebe umfassen jeweils ein in einem feststehenden Gehäuse gelagertes Kegelrad. Die Gehäuse sind jeweils auf der der Kalotte zugewandten Seite mit einer Kufe versehene, welche in Nuten in die Kalotten hineinragen.

Die US 5502598 A offenbart eine Vorrichtung zum Verschwenken eines Kameraobjektivs mit einem kugelförmigen Objektivhalter, der einen äquatorialen Zahnsegmentantrieb und einen senkrecht zu Letzterem angeordneten meridianen Zahnsegmentantrieb mit einem Zahnrad aufweist, dessen Achse in einer in einer Meridian-Ebene liegenden Nut geführt ist. Das bogenförmige Zahnsegment des äquatorialen Antriebs befindet sich auf einem um die Achse des äquatorialen Antriebs schwenkbaren Kugelabschnitt, der eine äquatoriale Nut aufweist, in der die Achse des Zahnrads des äquatorialen Antriebs geführt ist.

Die DE 101 13 436 B4 beschreibt eine Inspektionskamera mit einem um eine Achse schwenkbar und eine Achse drehbar gelagerten Kameraobjektiv.

Die DE 101 02 056 B4 beschreibt eine Inspektionskamera, bei der eine Leitvorrichtung vorhanden ist, um die Satellitenkamera in Nebenkanäle lenken zu können. Die Leitvorrichtung kann dabei zwischen einem über den Außenumriss der Satellitenkamera hinausreichenden Arbeitszustand und einem funktionslosen Ruhezustand verstellt werden. Insbesondere kann die Satellitenkamera mittels der Leitvorrichtung von Rohrwandungen eines Kanals abgedrückt und auf diese Weise in Nebenkanäle gelenkt werden.

Die DE 20 2004 002 132 U1 beschreibt eine Satellitenkamera mit einem kurvenlenkbaren Biegemodul. Durch Verstellung eines Fixierseils kann das Biegemodul entgegen der Federkraft einer Spannfeder seitlich abgebogen werden, um auf diese Weise das Biegemodul in seitliche Nebenkanäle lenken zu können.

Nachteilig an den bekannten Satellitenkameras ist es, dass zur Positionierung des Kameraobjektivs jeweils Verstelleinrichtungen vorgesehen sind, wobei für die Lenkung der Satellitenkamera durch Nebenkanäle eine zusätzliche Leitvorrichtung bzw. ein zusätzliches Biegemodul vorgesehen werden muss. Dadurch werden die Satellitenkameras in ihrem Aufbau relativ komplex und störanfällig. Außerdem können derartige Satellitenkameras nur mit einem relativ hohen Kostenaufwand hergestellt werden.

Ausgehend von diesem Stand der Technik ist es deshalb Aufgabe der vorliegenden Erfindung, eine neue Inspektionskamera zur Inspektion insbesondere von Rohren, Kanälen oder Kaminen vorzuschlagen, die die Nachteile des vorbekannten Stands der Technik vermeidet.

Diese Aufgabe wird durch eine Inspektionskamera nach der Lehre des Anspruchs 1 gelöst.

Vorteilhafte Ausführungsformen der Erfindung sind Gegenstand der Unteransprüche.

Die erfindungsgemäße Inspektionskamera beruht auf dem Grundgedanken, dass an der Verstelleinrichtung zur Positionierung der Inspektionskamera zumindest zwei motorisch antreibbare Gelenkelemente vorgesehen sind, die in Richtung der Längsachse der Verstelleinrichtung hintereinander zwischen dem Kameraobjektiv und dem vorderen Ende des Vorschubstrangs angeordnet sind. Beide Gelenkelemente können dabei zumindest um eine Schwenkachse verschwenkt werden. Im Ergebnis kann also dadurch erreicht werden, dass die Verstelleinrichtung in den beiden Gelenkelementen zweimal abgeknickt wird, so dass das Gelenkelement dadurch beispielsweise eine Z-förmige oder S-förmige Gestalt einnehmen kann. Durch diese doppelt abgeknickte Gestalt der Verstelleinrichtung kann das Kameraobjektiv sehr gut positioniert werden. Dieses doppelte Abknicken der Verstelleinrichtung ist insbesondere dann von Vorteil, wenn der Umfang der Inspektionskamera erheblich kleiner als der Innendurchmesser des inspizierten Rohrs oder Kanals ist. Bei konventionellen Kameras ist das Kameraobjektiv aufgrund des großen Durchmesserunterschieds zwischen Inspektionskamera und Rohr bzw. Kanal üblicherweise auf dem unteren Grund des Rohrs bzw. Kanals, so dass eine Rundumsicht zur Inaugenscheinnahme des gesamten Umfangs des Rohrs oder Kanals aufgrund dieser asymmetrischen Anordnung des Kameraobjektivs nicht möglich ist. Durch das doppelte Abknicken der Verstelleinrichtung kann das Kameraobjektiv der erfindungsgemäßen Inspektionskamera ein Stück weit vom Grund des Rohrs bzw. Kanals abgehoben und anschließend das Kameraobjektiv entlang der Längsachse des Rohrs oder Kanals ausgerichtet werden. In dieser Position kann dann ein aussagekräftiger Rundumblick im Rohr aufgenommen werden.

Weiterhin vorteilhaft ist die doppelte Abknickbarkeit der Verstelleinrichtung an der erfindungsgemäßen Inspektionskamera dahingehend, dass dadurch Lenkbewegungen beim Umlenken der Inspektionskamera in Neben- bzw. Seitenkanäle oder Neben- bzw. Seitenrohre ermöglicht werden. Durch das doppelte Abknicken kann die Spitze der Inspektionskamera in das abknickende Seitenrohr bzw. den abknickenden Nebenkanal hineingelenkt werden. Durch anschließendes Strecken der Verstelleinrichtung kann anschließend gewährleistet werden, dass die Spitze der Inspektionskamera nicht wieder aus dem Seitenrohr bzw. dem Nebenkanal heraus fällt.

Die Kinematik der Abknickbewegung an der Verstelleinrichtung der erfindungsgemäßen Inspektionskamera ist grundsätzlich beliebig. Nach einer ersten bevorzugten Ausführungsform sollten die zumindest zwei Schwenkachsen der beiden Gelenkelemente jeweils rechtwinklig zur Längsachse der Verstelleinrichtung verlaufen.

Nach einer weiteren bevorzugten Ausführungsform der Erfindung ist vorgesehen, dass die zumindest zwei Schwenkachsen der beiden Gelenkelemente jeweils parallel zueinander verlaufen.

In der Grundform der erfindungsgemäßen Inspektionskamera ist jedes der beiden Gelenkelemente um eine Schwenkachse verschwenkbar. Verlaufen die beiden Schwenkachsen dabei beispielsweise parallel zueinander, kann das Kameraobjektiv relativ zum vorderen Ende des Vorschubstrangs in einer bestimmten Verstellebene verstellt werden. Um eine Verstellung des Kameraobjektivs relativ zum vorderen Ende des Vorschubstrangs in einem definierten, dreidimensionalen Verstellraum zu ermöglichen, können die beiden Gelenkelemente so ausgestattet werden, dass sie jeweils um eine erste Schwenkachse und um eine zweite Schwenkachse verschwenkbar sind. Dies bedeutet mit anderen Worten, dass die Verstelleinrichtung in vier Schwenkachsen verstellt werden kann.

Die beiden Schwenkachsen eines Gelenkelements sollten dabei bevorzugt rechtwinklig zueinander verlaufen.

Außerdem ist es besonders vorteilhaft, wenn die erste Schwenkachse und die zweite Schwenkachse eines Gelenkelements sich in einem gemeinsamen Schnittpunkt mit der Längsachse der Verstelleinrichtung schneiden. Dies bedeutet mit anderen Worten, dass die beiden Schwenkachsen ein rechtwinkliges Kreuz bilden, wobei die Längsachse der Verstelleinrichtung durch den Schnittpunkt dieses Kreuzes verläuft.

Um die Blickrichtung bei Betrieb der Inspektionskamera noch differenzierter einstellen zu können, kann zwischen dem Kameraobjektiv und dem vorderen Ende des Vorschubstrangs eine Drehlagerung vorgesehen sein, damit das Kameraobjektiv relativ zum vorderen Ende des Vorschubstrangs rotatorisch um eine Drehachse verschwenkt werden kann.

Diese Drehachse zur rotatorischen Einstellung des Kameraobjektivs sollte dabei bevorzugt koaxial zur Längsachse der Verstelleinrichtung verlaufen.

Für die konstruktive Umsetzung der Gelenkelemente an der erfindungsgemäßen Inspektionskamera gibt es verschiedenste Möglichkeiten. Eine besonders bevorzugte Ausführungsform von Gelenkelementen zur Realisation der Verstelleinrichtung wird durch zwei Gelenkteile charakterisiert, die um zumindest eine Schwenkachse relativ zueinander verschwenkbar sind. Das erste Gelenkteil weist dabei eine rotationssymmetrisch ausgebildete, konvex gewölbte Lagerfläche mit einer Nut auf, wohingegen das zweite Gelenkteil eine abschnittsweise rotationssymmetrisch ausgebildete, konkav gewölbte Anlagefläche mit Führungsvorsprung aufweist. Die konkave Anlagefläche kommt dabei auf der konvex gewölbten Lagerfläche zur Anlage, so dass das erste Gelenkteil um die von den beiden Flächen definierte Schwenkachse gleitend verschwenkt werden kann. Zur Führung dieser Schwenkbewegung greift der Führungsvorsprung des zweiten Gelenkteils in die Nut des ersten Gelenkteils formschlüssig ein.

Um besonders kompakte Bauformen zu realisieren, kann ein Gelenkelement aus jeweils einem ersten Gelenkteil und zwei zweiten Gelenkteilen aufgebaut werden. Die Funktionskinematik zur Verstellung um eine Schwenkachse entspricht dabei den zuvor beschriebenen Gelenkelementen, wobei bei den um zwei Schwenkachsen verschwenkbaren Gelenkelementen das erste Gelenkteil zwei konvex gewölbte Lagerflächen aufweist, die mit jeweils einer konkaven Anlagefläche an einem der zugeordneten zweiten Gelenkteile zusammenwirken.

Zur Begrenzung der Verstellbewegung in den Gelenkelementen können in den Nuten der ersten Gelenkteile jeweils Endanschläge vorgesehen werden. An diesen Endanschlägen kommen dann die Führungsvorsprünge zur Anlage und definieren dadurch den maximalen Schwenkbereich des jeweiligen Gelenkelements.

In welcher Weise der motorische Antrieb der Gelenkelemente realisiert ist, ist grundsätzlich beliebig. Besonders geeignet sind dazu elektrische Antriebsmotoren, da diese sehr klein gebaut und mit flexiblen Anschlusskabeln gut an die Energieversorgung angeschlossen werden können.

Um eine möglichst flexible Einstellbarkeit der Inspektionskamera zu realisieren, sollte für jede Schwenkachse der mehreren Gelenkelemente jeweils ein Antriebsmotor vorgesehen sein, wobei diese Antriebsmotoren jeweils unabhängig voneinander antreibbar sind. Ist ein Gelenkelement beispielsweise um zwei Schwenkachsen verschwenkbar, sind in diesem Gelenkelement zwei Antriebsmotoren vorzusehen. Werden zwei solcher um jeweils zwei Schwenkachsen verschwenkbarer Gelenkelemente in Richtung der Längsachse der Verstelleinrichtung hintereinander verbaut, ergeben sich insgesamt vier Antriebsmotoren. Sind noch mehr Gelenkelemente, beispielsweise drei oder vier Gelenkelemente, in Richtung der Längsachse hintereinander angeordnet, können sich auch Bauformen mit sechs, acht oder mehr Antriebsmotoren ergeben. Je höher die Anzahl der Gelenkelemente mit jeweils einer bzw. zwei Schwenkachsen ist, desto flexibler und anschmiegsamer kann die Verstelleinrichtung in ihrer Gestalt verformt werden. Bei mehreren in Richtung der Längsachse hintereinander angeordneten Gelenkelementen können sich somit schlangenförmige Einstellbarkeiten ergeben, wobei dies jedoch eine entsprechend hohe Anzahl von Antriebsmotoren erfordert.

Ob zur Verstellung der Gelenkelemente die vom Antriebsmotor aufgebrachte Stellbewegung auf das erste Gelenkteil oder das zweite Gelenkteil eines Gelenkelements übertragen wird, ist grundsätzlich beliebig. Besonders kompakte Bauformen ergeben sich jedoch, wenn die Stellbewegung des Antriebsmotors auf das erste Gelenkteil des Gelenkelements übertragen wird.

In diesem Falle sollte zur weiteren Reduktion des erforderlichen Bauraums der Antriebsmotor vom Antrieb des ersten Gelenkteils in das zugeordnete zweite Gelenkteil integriert sein. Dazu kann in das zweite Gelenkteil beispielsweise eine entsprechend geformte Aufnahme eingeformt werden, in die der Antriebsmotor eingesetzt und dort fixiert wird.

Die Art der Kraftübertragung vom Antriebsmotor auf das erste Gelenkteil kann in verschiedensten Formen realisiert werden. Beispielsweise sind Verzahnungen am ersten Gelenkteil denkbar, in die ein entsprechend geformtes Antriebsritzel des Antriebsmotors eingreift. Um einen möglichst zuverlässigen und kompakt realisierbaren Antriebsstrang zwischen Antriebsmotor und Gelenkteil zu realisieren, eignen sich insbesondere Antriebsriemen zur Kraftübertragung. Der Antriebsriemen steht dabei mittelbar oder unmittelbar mit dem Antriebsmotor in Eingriff und zumindest ein Ende des Antriebsriemens ist am ersten Gelenkteil befestigt.

Besonders vorteilhaft ist es, wenn beide Enden des Antriebsriemens die konvex gewölbte Lagerfläche des ersten Gelenkteils abschnittsweise umschlingen und sich der Umschlingungswinkel der beiden Enden des Antriebsriemens abhängig vom Stellwinkel des ersten Gelenkteils relativ zum zugeordneten zweiten Gelenkteil ändert. Auf diese Weise kann nicht nur die Stellbewegung vom Antriebsmotor auf das Gelenkteil übertragen werden, sondern zusätzlich auch eine Führung des Gelenkteils realisiert werden.

Um beispielsweise ein hohes Antriebsmoment bei Verwendung kleiner Antriebsmotoren erzeugen zu können, ist es möglich, zumindest eine Getriebestufe zwischen Antriebsmotor und Antriebsriemen vorzusehen. Auf diese Weise kann eine Drehzahlübersetzung und eine entsprechende Drehmomentuntersetzung realisiert werden. Dies bedeutet mit anderen Worten, dass eine hohe Drehzahl des Antriebsmotors bei relativ geringem Antriebsmoment in ein hohes Antriebsmoment am Antriebsriemen übersetzt werden kann.

Um das Einführen und Umlenken der Inspektionskamera zu erleichtern, können an der Außenseite der Inspektionskamera Gleitelemente vorgesehen werden. Diese Gleitelemente können insbesondere in der Art von Gleitrollen ausgebildet sein, die drehbar am Gehäuse der Inspektionskamera gelagert sind.

Eine Ausführungsform einer erfindungsgemäßen Inspektionskamera ist in den Zeichnungen schematisch dargestellt und wird nachfolgend beispielhaft erläutert.

### Es zeigen:

- Fig. 1: eine Inspektionskamera mit gebrochen dargestelltem Gehäuse in perspektivischer seitlicher Ansicht;
- Fig. 2: die Inspektionskamera gemäß Fig. 1 mit geschnitten dargestellter Verstelleinrichtung;
- Fig. 3: das erste und das zweite Gelenkteil eines Gelenkelements der Inspektionskamera gemäß Fig. 1 in perspektivischer Ansicht;
- Fig. 4: den Antrieb der Gelenkelemente der Inspektionskamera gemäß Fig. 1 in perspektivischer Ansicht;
- Fig. 5: die Inspektionskamera gemäß Fig. 1 mit zusätzlichen Gleitrollen in einer ersten Arbeitsstellung;
- Fig. 6: die Inspektionskamera gemäß Fig. 1 in einer zweiten Arbeitsstellung;
- Fig. 7: die Inspektionskamera gemäß Fig. 1 in einer dritten Arbeitsstellung;
- Fig. 8: die Inspektionskamera gemäß Fig. 1 in einer vierten Arbeitsstellung.

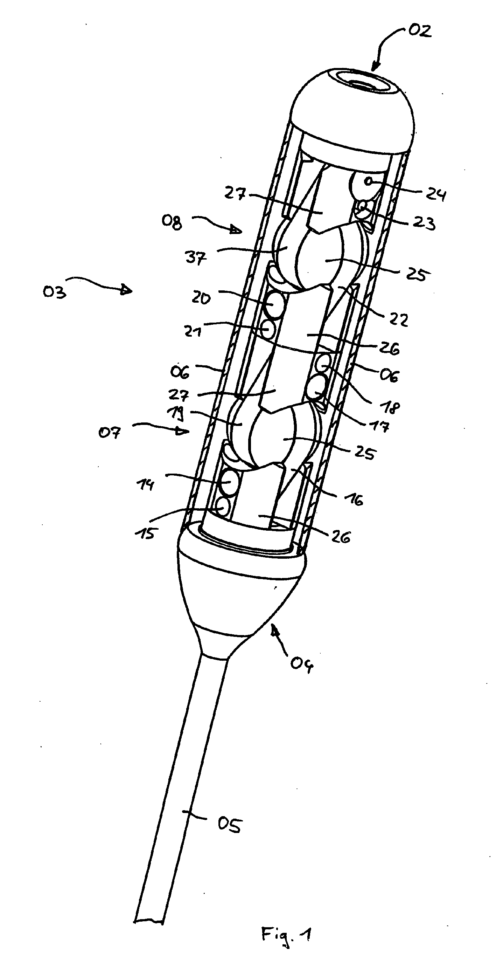

Fig. 1 zeigt eine Inspektionskamera 01 in perspektivischer Darstellung. Die Inspektionskamera 01 ist mit einem Kameraobjektiv 02 und einer zur Positionierung des Kameraobjektivs 02 bzw. zum Lenken der Inspektionskamera 01 vorgesehenen Verstelleinrichtung 03 ausgestattet. Durch Verstellung der Verstelleinrichtung 03 kann das Kameraobjektiv 02 relativ zum vorderen Ende 04 eines Vorschubstrangs 05 verstellt werden. Durch Manipulation des Vorschubstrangs 05 kann die Inspektionskamera 01 in unzugängliche Bereiche von Kanälen, Rohren oder Kaminen eingeführt werden. Die Bild- bzw. Filmaufnahmen der im Kameraobjektiv 02 eingebauten Kamera werden dabei über nicht dargestellte Datenkabel durch den Vorschubstrang an ein nicht dargestelltes Leitgerät übertragen. Außerdem verlaufen im Vorschubstrang 05 Versorgungsleitungen zur Energieversorgung der Funktionselemente in der Inspektionskamera 01.

Zur besseren Erkennbarkeit des Aufbaus der Verstelleinrichtung 03 ist die Ummantelung 06 der Verstelleinrichtung 03, die beispielsweise von einem Gummibalg gebildet sein kann, halbseitig geschnitten dargestellt. Die Verstelleinrichtung 03 umfasst zwei Gelenkelemente 07 und 08, die unabhängig voneinander um jeweils zwei Schwenkachsen verschwenkt werden können.

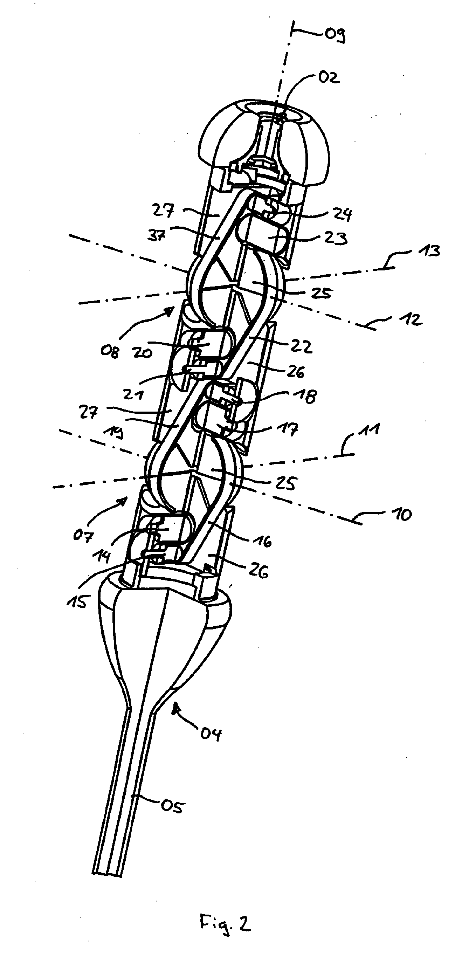

Fig. 2 stellt die Inspektionskamera 01 mit der Verstelleinrichtung 03 im Längsschnitt dar. Die beiden Gelenkelemente 07 und 08 sind in Richtung der Längsachse 09 hintereinander angeordnet, so dass das Kameraobjektiv 02 relativ zum vorderen Ende 04 des Vorschubstrangs 05 abgeknickt werden kann. Die beiden Gelenkelemente 07 und 08 können dabei jeweils um zwei Schwenkachsen 10 und 11 bzw. 12 und 13 verschwenkt werden. Zum Antrieb der Schwenkbewegung um die Schwenkachse 10 dient ein Antriebsmotor 14, dessen Stellbewegung über eine Getriebestufe 15 auf einen Antriebsriemen 16 übertragen wird. In gleicher Weise ist ein Antriebsmotor 17, eine Getriebestufe 18 und ein Antriebsriemen 19 der Schwenkachse 11, ein Antriebsmotor 20, eine Getriebestufe 21 und ein Antriebsriemen 22 der Schwenkachse 13 und ein Antriebsmotor 23, eine Getriebestufe 24 und ein Antriebsriemen 37 der Schwenkachse 12 zugeordnet.

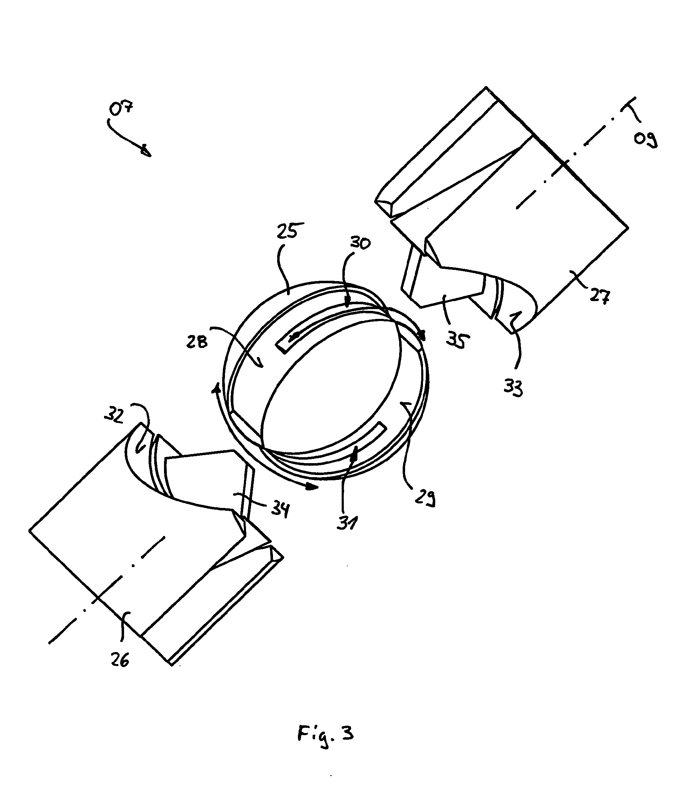

Zur Darstellung der Verstellkinematik der Gelenkelemente 07 und 08 ist in Fig. 3 das Gelenkelement 07 vereinfacht dargestellt. Das Gelenkelement 07 besteht seinerseits aus einem ersten Gelenkteil 25 und zwei zweiten Gelenkteilen 26 und 27. Wie insbesondere aus Fig. 1 ersichtlich, ist das erste Gelenkteil 25 kugelförmig aufgebaut, wobei in Fig. 3 das Gelenkteil 25 aufgebrochen dargestellt ist, um die Funktionen verdeutlichen zu können. Die beiden zweiten Gelenkteile 26 und 27 sind im Wesentlichen baugleich und werden bei der Montage in der Verstelleinrichtung 03 um 90° verdreht verbaut. Das erste Gelenkteil 25 weist zwei konvex gewölbte Lagerflächen 28 und 29 auf, in die jeweils eine Nut 30 und 31 eingearbeitet ist. Die beiden konvexen Lagerflächen 28 und 29 sind um 90° versetzt zueinander angeordnet und definieren auf diese Weise Zylinderflächen um die beiden Schwenkachsen 10 und 11. An den beiden Gelenkteilen 26 und 27 sind jeweils konkave Anlageflächen 32 und 33 vorgesehen, die auf den konvexen Lagerflächen 28 bzw. 29 des ersten Gelenkteils 25 zur Anlage kommen. Außerdem weisen beide zweiten Gelenkteile 26 und 27 einen Führungsvorsprung 34 bzw. 35 auf, die jeweils in die Nuten 30 bzw. 31 eingreifen und dadurch die Schwenkbewegung der Gelenkteile 26 bzw. 27 um die Schwenkachsen 10 bzw. 11 führen.

Wie insbesondere aus Fig. 1 ersichtlich, sind die Antriebsmotoren 14, 17, 20 und 23 jeweils in ein zweites Gelenkteil integriert.

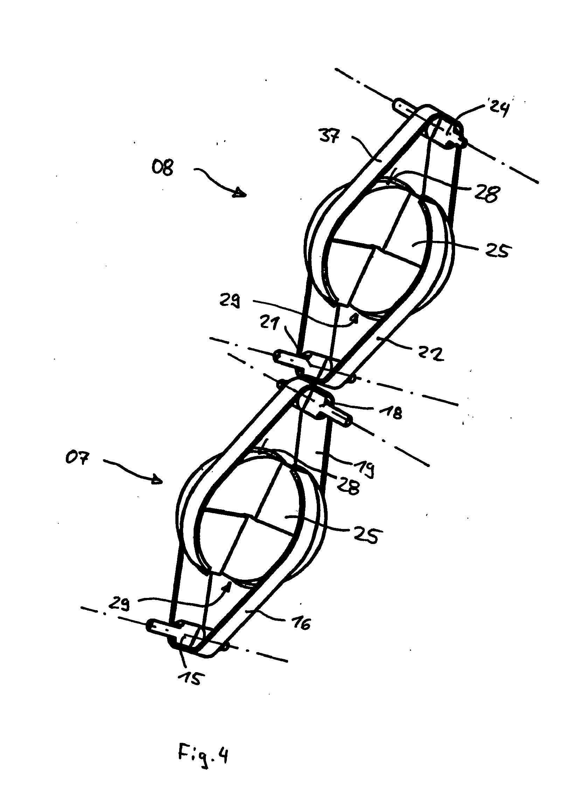

Die Übertragung der Stellbewegungen durch die Antriebsriemen 16, 19, 22 und 37 ist in Fig. 4 schematisiert dargestellt, wobei in Fig. 4 von den Gelenkelementen 07 und 08 jeweils nur das erste Gelenkteil 25 dargestellt ist. Die von den Antriebsmotoren rotatorisch angetriebenen Getriebestufen 15, 18, 21 und 24 stehen reibschlüssig mit den Antriebsriemen in Eingriff, wobei die Antriebsriemen 16 bis 37 mit ihren Enden jeweils die konvexen Lagerflächen 28 und 29 der ersten Getriebeteile 25 umschlingen.

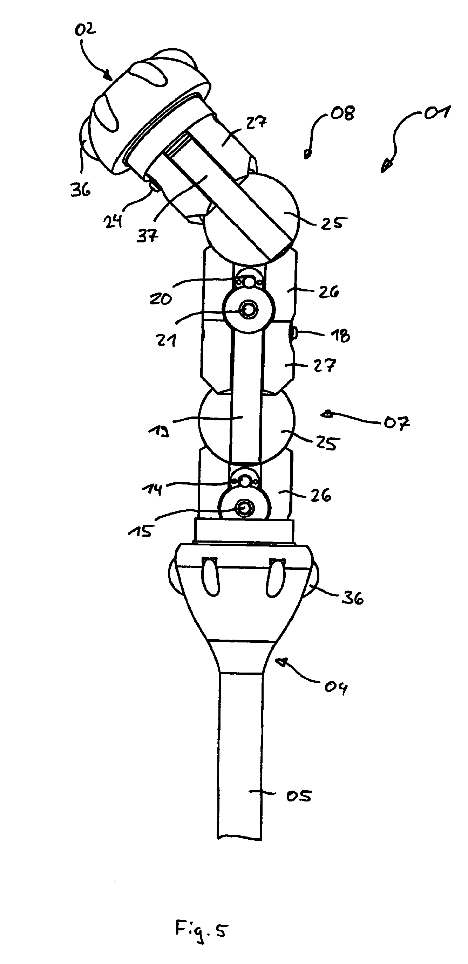

In Fig. 5 bis Fig. 8 ist die Inspektionskamera 01 in verschiedenen Arbeitspositionen dargestellt, wobei die Inspektionskamera 01 in den in Fig. 5 bis Fig. 6 dargestellten Ausführungsformen zusätzlich mit mehreren Gleitrollen 36 ausgestattet ist. In Fig. 5 ist nur das Gelenkelement 08 um die Schwenkachse 13 abgeknickt.

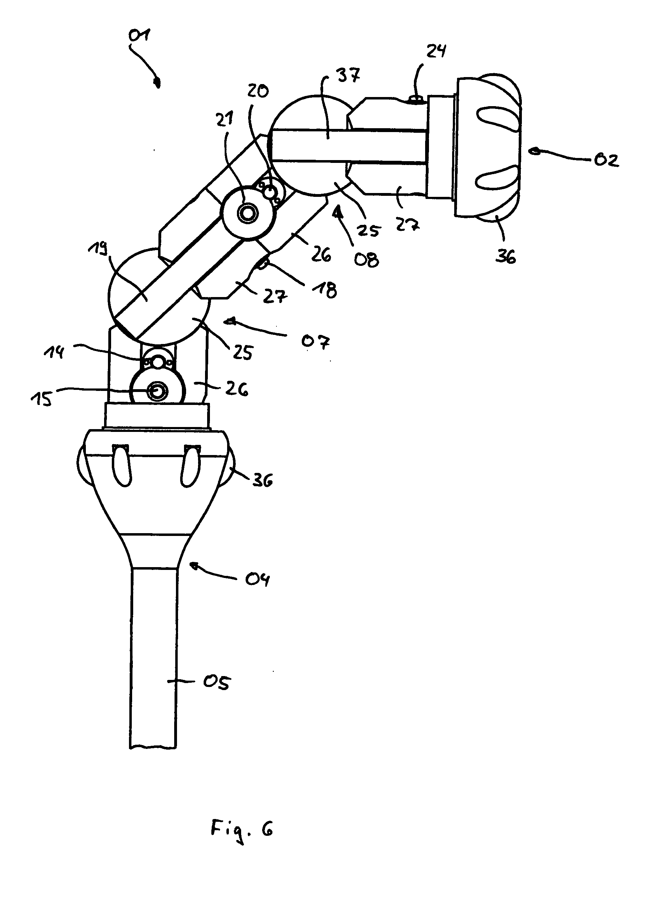

In Fig. 6 ist die Verstelleinrichtung doppelt um die Schwenkachsen 11 und 12 abgeknickt.

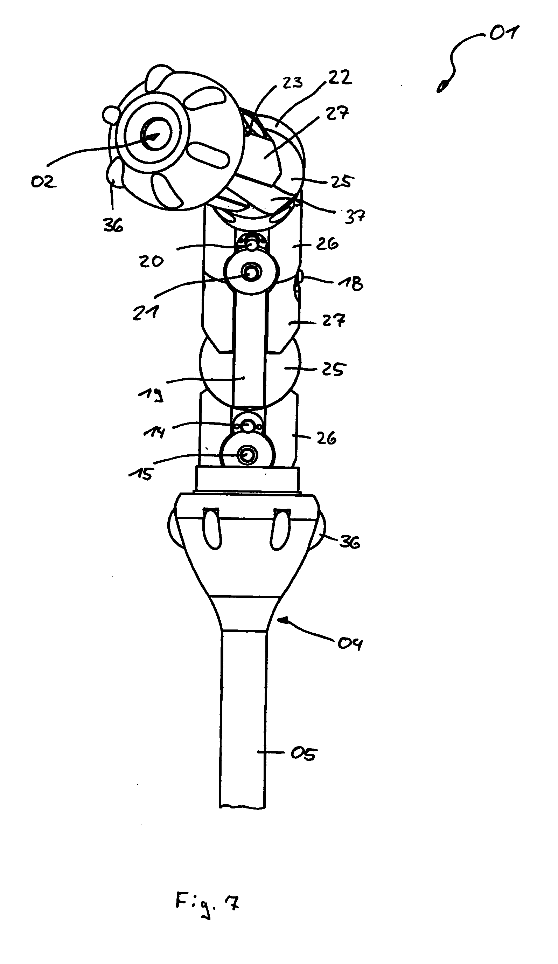

In Fig. 7 wird die Inspektionskamera dann zusätzlich auch noch um die Schwenkachse 13 abgeknickt.

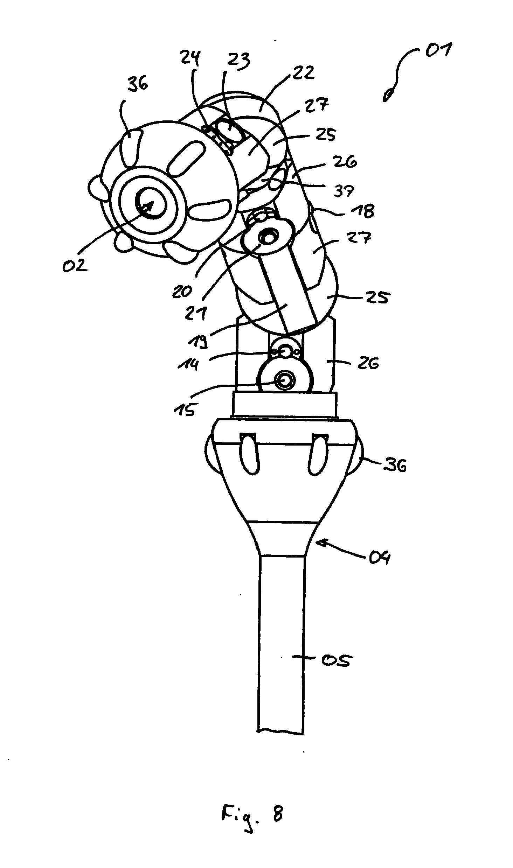

In Fig. 8 ist dann zusätzlich auch noch die Schwenkachse 10 abgeknickt, so dass dann alle vier Freiheitsgrade durch Verschwenken um die Schwenkachsen 10, 11, 12 und 13 genutzt werden.

### Bezugszeichenliste

- 01: Inspektionskamera
- 02: Kameraobjektiv
- 03: Verstelleinrichtung
- 04: Vorderes Ende (Vorschubstrang)
- 05: Vorschubstrang
- 06: Ummantelung
- 07: Gelenkelement
- 08: Gelenkelement
- 09: Längsachse (Verstelleinrichtung)
- 10: Schwenkachse
- 11: Schwenkachse
- 12: Schwenkachse
- 13: Schwenkachse
- 14: Antriebsmotor
- 15: Getriebestufe
- 16: Antriebsriemen
- 17: Antriebsmotor
- 18: Getriebestufe
- 19: Antriebsriemen
- 20: Antriebsmotor
- 21: Getriebestufe
- 22: Antriebsriemen
- 23: Antriebsmotor
- 24: Getriebestufe
- 25: Erstes Gelenkteil
- 26: Zweites Gelenkteil
- 27: Zweites Gelenkteil
- 28: Konvexe Lagerfläche
- 29: Konvexe Lagerfläche
- 30: Nut
- 31: Nut
- 32: Konkave Anlagefläche

- 33: Konkave Anlagefläche
- 34: Führungsvorsprung
- 35: Führungsvorsprung
- 36: Gleitrolle
- 37: Antriebsriemen

## Patentansprüche

1. Inspektionskamera (01) zur Inspektion insbesondere von Rohren oder Kanälen, wobei die Inspektionskamera (01) am vorderen Ende (04) eines Vorschubstrangs (05) befestigbar ist, und wobei die Inspektionskamera (01) ein Kameraobjektiv (02) umfasst, mit dem Bildaufnahmen insbesondere im Inneren von Rohren oder Kanälen gemacht werden können, und wobei die Inspektionskamera (01) eine Verstelleinrichtung (03) umfasst, mit der das Kameraobjektiv (02) relativ zum vorderen Ende (04) des Vorschubstranges (05) ferngesteuert positioniert werden kann,
**dadurch gekennzeichnet,**
**dass** die Verstelleinrichtung (03) zumindest zwei motorisch antreibbare Gelenkelemente (07, 08) umfasst, die in Richtung der Längsachse (09) der Verstelleinrichtung (03) hintereinander zwischen dem Kameraobjektiv (02) und dem vorderen Ende (04) des Vorschubstranges (05) angeordnet sind, wobei jedes der Gelenkelemente (07, 08) um zumindest eine Schwenkachse (10, 11, 12, 13) verschwenkbar ist.

2. Inspektionskamera nach Anspruch 1,
**dadurch gekennzeichnet,**
**dass** die Schwenkachsen (10, 11, 12, 13) der beiden Gelenkelemente (07, 08) jeweils rechtwinklig zur Längsachse (09) der Verstelleinrichtung (03) verlaufen.

3. Inspektionskamera nach Anspruch 1 oder 2,
**dadurch gekennzeichnet,**
**dass** die Schwenkachsen (10, 11, 12, 13) der beiden Gelenkelemente (07, 08) jeweils paarweise parallel zueinander verlaufen.

4. Inspektionskamera nach einem der Ansprüche 1 bis 3,
**dadurch gekennzeichnet,**
**dass** beide Gelenkelemente (07, 08) um jeweils eine erste Schwenkachse (10, 12) und um eine zweite Schwenkachse (11, 13) verschwenkbar sind.

5. Inspektionskamera nach Anspruch 4,
**dadurch gekennzeichnet,**
**dass** die erste Schwenkachse (10, 12) und die zweite Schwenkachse (11, 13) eines Gelenkelements (07, 08) jeweils rechtwinklig zueinander verlaufen.

6. Inspektionskamera nach einem der Ansprüche 1 bis 5,
**dadurch gekennzeichnet,**
**dass** die erste Schwenkachse (10, 12) und/oder die zweite Schwenkachse (11, 13) eines Gelenkelements (07, 08) sich in einem gemeinsamen Schnittpunkt mit der Längsachse (09) der Verstelleinrichtung (03) schneiden.

7. Inspektionskamera nach einem der Ansprüche 1 bis 6,
**dadurch gekennzeichnet,**
**dass** das Kameraobjektiv (02) relativ zum vorderen Ende des Vorschubstrang rotatorisch um eine Drehachse schwenkend antreibbar ist.

8. Inspektionskamera nach Anspruch 7,
**dadurch gekennzeichnet,**
**dass** die Drehachse koaxial zur Längsachse (09) der Verstelleinrichtung (03) verläuft.

9. Inspektionskamera nach einem der Ansprüche 1 bis 8,
**dadurch gekennzeichnet,**
**dass** die Gelenkelemente (07, 08) jeweils zumindest ein erstes Gelenkteil (25) und zumindest ein zweites Gelenkteil (26, 27) aufweisen, die um zumindest eine Schwenkachse (10, 11, 12, 13) relativ zueinander verschwenkbar sind, wobei das erste Gelenkteil (25) zumindest eine gegenüber einer Schwenkachse (10, 11, 12, 13) abschnittsweise rotationssymmetrisch ausgebildete, konvex gewölbte Lagerfläche (28, 29) mit einer Nut (30, 31) aufweist, und wobei das zweite Gelenkteil (26, 27) eine gegenüber der Schwenkachse (10, 11, 12, 13) abschnittsweise rotationssymmetrisch ausgebildete, konkav gewölbte Anlagefläche (32, 33) mit einem Führungsvorsprung (34, 35) aufweist, und wobei die konkave Anlagefläche (32, 33) des zweiten Gelenkteils (26, 27) auf der konvexen Lagerfläche (28, 29) des ersten Gelenkteils (25) gleitend um die Schwenkachse (10, 11, 12, 13) verschwenkt werden kann, und wobei der Führungsvorsprung (34, 35) des zweiten Gelenkteils (26, 27) die Schwenkbewegung führend in der Nut (30, 31) des ersten Gelenkteils (25) in Eingriff kommt.

10. Inspektionskamera nach Anspruch 9,
**dadurch gekennzeichnet,**
**dass** die Gelenkelemente (07, 08) jeweils ein erstes Gelenkteil (25) und zwei zweite Gelenkteile (26, 27) aufweisen, wobei das erste Gelenkteil (25) zwei gegenüber jeweils einer Schwenkachse (10, 11, 12, 13) abschnittsweise rotationssymmetrisch ausgebildete, konvex gewölbte Lagerflächen (28, 29) mit jeweils einer zugeordneten Nut (30, 31) aufweist, und wobei die beiden zweiten Gelenkteile (26, 27) jeweils eine gegenüber jeweils einer Schwenkachse (10, 11, 12, 13) abschnittsweise rotationssymmetrisch ausgebildete, konkav gewölbte Anlagefläche (32, 33) mit jeweils einem zugeordneten Führungsvorsprung (34, 35) aufweisen.

11. Inspektionskamera nach Anspruch 9 oder 10,
**dadurch gekennzeichnet,**
**dass** die beiden durch das erste Gelenkteil (25) definierten Schwenkachsen (10, 11, 12, 13) rechtwinklig zueinander verlaufen.

12. Inspektionskamera nach einem der Ansprüche 9 bis 11,
**dadurch gekennzeichnet,**
**dass** in der Nut (30, 31) Endanschläge vorgesehen sind, an denen der Führungsvorsprung (34, 35) zur Anlage kommen kann und die den maximalen Schwenkbereich des Gelenkelements (07, 08) in eine Stellrichtung definieren.

13. Inspektionskamera nach einem der Ansprüche 9 bis 12,
**dadurch gekennzeichnet,**
**dass** zum Antrieb der Gelenkelemente (07, 08) jeweils zumindest ein Antriebsmotor (14, 17, 20, 23) vorgesehen ist.

14. Inspektionskamera nach Anspruch 13,
**dadurch gekennzeichnet,**
**dass** zum verschwenkenden Antrieb der Gelenkelemente (07, 08) für jede Schwenkachse (10, 11, 12, 13) ein Antriebsmotor (14, 17, 20, 23) vorgesehen ist, wobei die Antriebsmotoren (14, 17, 20, 23) unabhängig voneinander antreibbar sind.

15. Inspektionskamera nach einem der Ansprüche 9 bis 14,
**dadurch gekennzeichnet,**
**dass** die Stellbewegung jedes Antriebsmotors (14, 17, 20, 23) mittelbar oder unmittelbar auf das erste Gelenkteil (25) des Gelenkelements (07, 08) übertragen wird.

16. Inspektionskamera nach einem der Ansprüche 9 bis 15,
**dadurch gekennzeichnet,**
**dass** der Antriebsmotor (14, 17, 20, 23) zum Antrieb eines ersten Gelenkteils (25) in das zugeordnete zweite Gelenkteil (26, 27) des Gelenkelements (07, 08) eingebaut ist.

17. Inspektionskamera nach einem der Ansprüche 9 bis 16,
**dadurch gekennzeichnet,**
**dass** zur Übertragung der Stellbewegung des Antriebsmotors (14, 17, 20, 23) auf das erste Gelenkteil (25) des Gelenkelements (07, 08) ein Antriebsriemen (16, 19, 22, 37) vorgesehen ist, wobei der Antriebsriemen (16, 19, 22, 37) mittelbar oder unmittelbar mit dem zugeordneten Antriebsmotor (14, 17, 20, 23) in Eingriff steht, und wobei zumindest ein Ende des Antriebsriemens (16, 19, 22, 37) am ersten Gelenkteil (25) befestigt ist.

18. Inspektionskamera nach Anspruch 17,
**dadurch gekennzeichnet,**
**dass** die Enden des Antriebsriemens (16, 19, 22, 37) die konvex gewölbte Lagerfläche (28, 29) des ersten Gelenkteils (25) abschnittsweise umschlingen, wobei sich der Umschlingungswinkel an beiden Enden abhängig vom Stellwinkel des ersten Gelenkteils (25) relativ zum zugeordneten zweiten Gelenkteil (26, 27) ändert.

19. Inspektionskamera nach Anspruch 17 oder 18,
**dadurch gekennzeichnet,**
**dass** zur mittelbaren, drehzahlübersetzenden Übertragung der Stellbewegung des Antriebsmotors (14, 17, 20, 23) auf den Antriebsriemen (16, 19, 22, 37) zumindest eine Getriebestufe (15, 18, 21, 24) zwischen Antriebsmotor (14, 17, 20, 23) und Antriebsriemen (16, 19, 22, 37) vorgesehen ist.

20. Inspektionskamera nach einem der Ansprüche 1 bis 19,
**dadurch gekennzeichnet,**
**dass** an der Außenseite der Inspektionskamera (01) zumindest ein Gleitelement, insbesondere eine drehbar gelagerte Gleitrolle (36), vorgesehen ist, mit dem die Inspektionskamera (01) auf der Innenseite insbesondere eines Rohrs oder Kanals geführt und/oder umgelenkt werden kann.
